# EUROPÄISCHE PATENTSCHRIFT

(11) **EP 0 612 289 B1**
(45) Veröffentlichungstag und Bekanntmachung des Hinweises auf die Patenterteilung: **11.09.1996**
(21) Anmeldenummer: 92923354.2
(22) Anmeldetag: 14.11.1992
(51) Int. Cl.: B60G 17/015, F16F 9/46

(54) **HYDRAULISCHER REGELBARER SCHWINGUNGSDÄMPFER**
HYDRAULIC ADJUSTABLE VIBRATION DAMPER
AMORTISSEUR DE VIBRATIONS HYDRAULIQUE REGLABLE

(30) Priorität: 18.11.1991 DE 4137915
(43) Veröffentlichungstag der Anmeldung: 31.08.1994
(73) Patentinhaber: ITT Automotive Europe GmbH, D-60488 Frankfurt am Main (DE)
(72) Erfinder: FEIGEL, Hans-Jörg, D-6365 Rosbach v.d.H. (DE)
(86) Internationale Anmeldenummer: EP9202627
(87) Internationale Veröffentlichungsnummer: WO9309966

(56) Entgegenhaltungen:
- EP-A- 0 277 788
- EP-A- 0 463 350
- EP-A- 0 485 647
- EP-A- 0 534 075
- WO-A-89/09891
- WO-A-91/13775
- DE-A- 2 911 768
- DE-A- 4 005 513
- FR-A- 2 573 200
- FR-A- 2 608 752
- GB-A- 2 164 723
- US-A- 4 995 635
- US-A- 5 000 478

## Beschreibung

Die Erfindung betrifft einen hydraulischen regelbaren Schwingungsdämpfer für Kraftfahrzeuge mit einem Arbeitszylinder, dessen Innenraum mittels eines durch eine Kolbenstange verschiebbaren Kolbens in eine erste Kolbenstangenseitige sowie eine zweite Arbeitskammer unterteilt ist, mit einem mit beiden Arbeitskammern in Verbindung stehenden oder in Verbindung bringbaren Ausgleichsraum, der mit der ersten Arbeitskammer über einen Verbindungskanal und mit der zweiten Arbeitskammer über ein erstes Rückschlagventil verbunden ist, einem steuerbaren Dämpferventil, das Änderungen der Dämpfungskraft ermöglicht, sowie einer Sensoranordnung, deren Ausgangsgröße eine Erkennung der Bewegungsrichtung des Kolbens ermöglicht.

Ein derartiger Schwingungsdämpfer ist aus der DE-A-40 05 513 bekannt. Um zu bestimmen, ob sich der vorbekannte Schwingungsdämpfer in der Druck- bzw. der Zugphase befindet, sind in einem ersten Teil der Kolbenstange Sensoren vorgesehen, die den Druckunterschied der Dämpferflüssigkeit in den beiden Arbeitskammern des Arbeitszylinders bestimmen und mit Mitteln zum Erzeugen von Ansteuersignalen zusammenwirken, die im Sinne des Regulierens des Dämpferflüssigkeitsaustausches zwischen den beiden Arbeitskammern elektrisch betätigbare Mittel beeinflussen. Die erstgenannten Mittel sowie die elektrisch betätigbaren Mittel sind dabei vorzugsweise in einem zweiten Teil der Kolbenstange angeordnet.

Weniger vorteilhaft anzusehen ist bei dem vorbekannten Schwingungsdämpfer vor allem der komplizierte Aufbau der Kolbenstange, deren Herstellung sowie Montage mit erheblichem Aufwand verbunden ist. Als nachteilig wird auch die Art der Verstellung der Dämpfungskraft empfunden, die in der Kolbenstange stattfindet und durch Zusammenwirken mehrerer elektrischer sowie mechanischer Bauelemente erreicht wird.

Es ist daher Aufgabe der vorliegenden Erfindung, einen hydraulischen Schwingungsdämpfer mit verstellbarer Dämpfung der eingangs genannten Gattung anzugeben, der vom Aufbau her einfacher und somit kostengünstig herstellbar ist. Insbesondere soll die angestrebte Änderung der Dämpfungskraft in weitem Bereich durch Verwendung von einfachen, zuverlässig funktionierenden Bauteilen ermöglicht werden.

Diese Aufgabe wird erfindungsgemäß dadurch gelöst, daß die Sensoranordnung zwischen der zweiten Arbeitskammer und dem Ausgleichsraum geschaltet ist. Durch diese Maßnahme wird eine günstige Anordnung der Sensoranordnung außerhalb der Kolbenstange bzw. des Kolbens, beispielsweise im Bodenbereich seitlich am Schwingungsdämpfergehäuse, ermöglicht.

Eine schnellere Erkennung der Bewegungsrichtung des Kolbens beim Wechsel von der Druck- ind die Zugstufe wird bei einer weiteren Ausgestaltung der ersten Lösung dadurch erreicht, daß zwischen der zweiten Arbeitskammer und dem Ausgleichsraum eine zweite Sensoranordnung geschaltet ist, wobei die erste und die zweite Sensoranordnung unterschiedliche Schaltpunktwerte aufweisen.

Eine Verbesserung der Empfindlichkeit kann durch hydraulische Flächenübersetzung kann nach einem weiteren Erfindungsmerkmal dadurch erreicht werden, daß die Sensoranordnung durch den zwischen der zweiten Arbeitskammer und dem Ausgleichsraum herrschenden Differenzdruck betätigbar ist. Die Sensoranordnung wird dabei vorzugsweise durch ein mit dem Differenzdruck beaufschlagbares, begrenzt in einem Sensorgehäuse verschiebbares Sensorelement gebildet, das mit einer seine Position erfassenden, unbeweglich angeordneten Registriereinrichtung zusammenwirkt. Durch eine Änderung des Hubes oder des Querschnittes des Sensorelementes kann die Empfindlichkeit der Sensoranordnung eingestellt werden.

Bei einer weiteren Ausgestaltung des Erfindungsgegenstandes ist das Sensorelement als eine im Sensorgehäuse geführte Kugel ausgebildet, deren Bewegung einerseits durch einen Anschlag und andererseits durch einen Dichtsitz begrenzt ist. Die Kugel stellt dabei ein kostengünstiges Präzisionsteil dar, durch dessen Zusammenwirken mit einem Dichtsitz auch bei niedrigen Kolbengeschwindigkeiten hohe Drücke erreichbar sind. Die Kugel kann auch vorzugsweise durch eine Feder vorgespannt sein, wodurch äußere Beschleunigungseinflüsse weitgehend eliminiert werden.

Eine präzise Fertigung des mit dem kugelförmigen Sensorelement zusammenwirkenden Dichtsitzes wird bei einer weiteren vorteilhaften Ausgestaltung der Erfindung dadurch erreicht, daß der Dichtsitz am Ende eines mit dem Ausgleichsraum in Verbindung stehenden, im Sensorgehäuse ausgebildeten Druckmittelkanals vorgesehen ist, der vorzugsweise als eine im Sensorgehäuse unbeweglich separat angeordnete Hülse ausgebildet ist.

Die Kugel besteht dabei vorzugsweise aus magnetisierbarem Werkstoff, so daß magnetische Registriereinrichtungen zum Einsatz kommen können.

Eine Erhöhung der Funktionssicherheit des erfindungsgemäßen Schwingungsdämpfers wird nach einem weiteren Erfindungsmerkmal dadurch erreicht, daß in den im Sensorgehäuse ausgebildeten Druckmittelkanälen dem Sensorelement Filter vorgeschaltet sind, die das Sensorelement vor Verunreinigungen schützen.

Nach einer weiteren vorteilhaften Ausgestaltung des Erfindungsgegenstandes ist die Registriereinrichtung als elektrischer Schaltkreis ausgebildet, dem ein magnetischer bzw. optischer Schaltkreis vorgeschaltet werden kann. Die vom elektrischen Schaltkreis erzeugten Ausgangssignale können günstig elektrisch weiterverarbeitet werden, wobei gleichzeitig eine berührungslose Sensierung möglich ist.

Eine besonders preiswerte Lösung wird nach einem weiteren Erfindungsmerkmal dadurch erreicht, daß die Registriereinrichtung durch ein Hallelement gebildet ist, das mit einem Permanentmagneten sowie einer Auswerteelektronik zusammenwirkt. Dabei ist es besonders vorteilhaft, wenn beide Sensoranordnungen in einem Sensorgehäuse angeordnet sind, wobei ihre Registriereinrichtungen mit einem einzigen Permanentmagneten zusammenwirken.

Die Temperaturabhängigkeit der Sensoranordnung kann bei einer weiteren vorteilhaften Ausführungsvariante der Erfindung weitgehend eliminiert werden, wenn das Hallelement als Differenz-Hallsensor ausgeführt ist.

Eine sinnvolle Vereinfachung der weiteren Signalübertragung wird bei einer weiteren Ausgestaltung der Erfindung dadurch erreicht, daß das Hallelement als Digital-Hallsensor ausgeführt ist.

Gemäß einer weiteren bevorzugten Ausführungsform der Erfindung sind die Kraftlinien des durch den Permanentmagneten erzeugten Magnetfeldes senkrecht zur Bewegungsrichtung des Sensorelementes ausgerichtet. Durch diese Maßnahme wird ein großer Meßeffekt erreicht.

Eine vorteilhafte Weiterbildung der Erfindung sieht vor, daß das Sensorelement und die Registriereinrichtung durch eine im Sensorgehäuse vorgesehene Trennwand voneinander getrennt sind. Da sich die Registriereinrichtung in einem "trockenen" Raum befindet, ist beispielsweise keine druckfeste Kabeldurchführung notwendig.

Bei einer besonders kostengünstigen Ausführungsvariante ist die Trennwand als Wand eines rohrförmigen, das Sensorelement führenden Führungsabschnittes ausgebildet ist, der im Sensorgehäuse angeordnet ist bzw. mit ihm einteilig ausgebildet ist.

Dabei ist es sinnvoll, wenn das Sensorgehäuse mittels eines Verschlußteiles geschlossen ist, das als Mittel zur Zugentlastung von zur Auswerteelektronik führenden elektrischen Leitungen ausgebildet ist. Dadurch wird eine multifunktionale Nutzung des Verschlußteiles gewährleistet.

Bei einer weiteren vorteilhaften Ausgestaltung der Erfindung ist im Sensorgehäuse ein Zentrierstift vorgesehen, der mit einer im Verschlußteil ausgebildeten Nut zusammenwirkt. Dadurch wird erreicht, daß bei der Montage keine Justierung der Sensoranordnung erforderlich ist.

Eine besonders kostengünstig herstellbare Ausführung des Erfindungsgegenstandes wird dadurch erreicht, daß das Sensorgehäuse durch den Ventilkörper des ersten Rückschlagventils gebildet ist, in dem ein in Richtung auf seinen Schließkörper zu vorgespanntes, durch den Schließkörper betätigbares Sensorelement begrenzt bewegbar angeordnet ist.

Eine andere vorteilhafte Ausführung des Erfindungsgegenstandes sieht vor, daß die Sensoranordnung seitlich am Arbeitszylinder bzw. an einem koaxial zum Arbeitszylinder angeordneten Außenrohr, vorzugsweise senkrecht zur Längsachse des Arbeitszylinders angeordnet ist. Durch die erwähnte Anordnung wird eine gute Zugänglichkeit bei einem Austausch der Sensoranordnung gewährleistet.

Eine besonders kompakte Ausführung des Erfindungsgegenstandes sieht schließlich vor, daß die Sensoranordnung bzw. -anordnungen im Bodenbereich des Arbeitszylinders angeordnet sind.

Weitere Einzelheiten, Merkmale und Vorteile der Erfindung gehen aus der nachfolgenden Beschreibung von vier Ausführungsbeispielen unter Bezugnahme auf die beiliegende Zeichnung. Es zeigen:
- Fig. 1: einen erfindungsgemäßen regelbaren Schwingungsdämpfer in schematischer Schnittdarstellung;
- Fig. 2: eine erste Ausführungsform der erfindungsgemäßen Sensoranordnung in größerem Maßstab;
- Fig. 3: eine gegenüber der in Fig. 2 gezeigten Ausführungsform leicht modifizierte zweite Ausführung der Sensoranordnung;
- Fig. 4: eine dritte Ausführungsform der erfindungsgemäßen Sensoranordnung in größerem Maßstab.

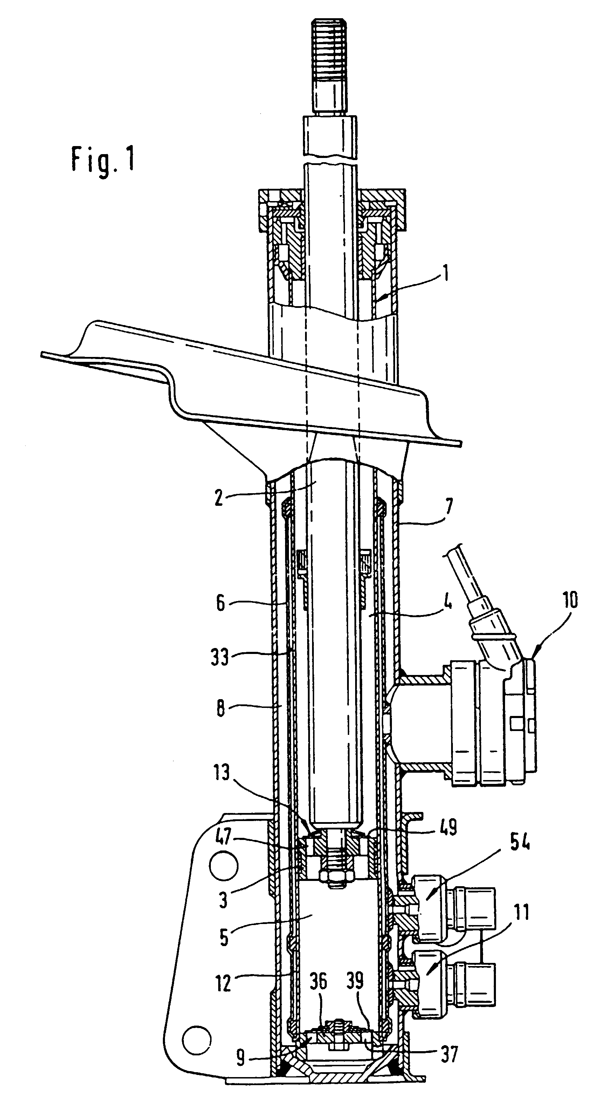

Der in Fig. 1 schematisch dargestellte regelbare Schwingungsdämpfer weist einen Arbeitszylinder 1 sowie ein zum Arbeitszylinder 1 koaxial angeordnetes Rohr 6 auf, so daß dazwischen ein Verbindungskanal 33 gebildet wird. Koaxial zum Arbeitszylinder 1 bzw. dem Rohr 6 ist weiter ein Außenrohr 7 angeordnet, das mit dem Rohr 6 einen teilweise mit Öl gefüllten, mit dem Verbindungskanal 33 zusammenwirkenden Ausgleichsraum 8 mit einem Kreisringquerschnitt begrenzt. Der Innenraum des Arbeitszylinders 1 ist mittels eines durch eine hohle Kolbenstange 2 verschiebbaren Kolbens 3 in eine oberhalb des Kolbens 3 ausgebildete erste Arbeitskammer 4 sowie eine unterhalb des Kolbens 3 ausgebildete zweite Arbeitskammer 5 unterteilt.

Im Bodenbereich des gezeigten Schwingungsdämpfers befindet sich ein in der Zugstufe wirksames erstes Rückschlagventil 9, während im Kolben 3 ein in der Druckstufe wirksames zweites Rückschlagventil 13 ausgebildet ist. Die beiden Rückschlagventile 9,13 sind vom Aufbau her identisch ausgebildet und bestehen aus je einer federnd vorgespannten Ventilscheibe 39,49, die mit in einem Ventilkörper 36 bzw. dem Kolben 3 vorgesehenen Durchlässen 37,47 zusammenwirken. Das erste Rückschlagventil 9 ermöglicht in der Zugstufe ein Nachsaugen des Öls aus dem Ausgleichsraum 8 in die zweite Arbeitskammer 5, während das zweite Rückschlagventil 13 in der Druckstufe öffnet und eine Verbindung zwischen der zweiten Arbeitskammer 5 und dem Verbindungskanal 33 freigibt. Um bei Bedarf Änderungen der Dämpfungskraft des gezeigten Schwingungsdämpfers vornehmen zu können, ist ein in seiner Gesamtheit mit dem Bezugszeichen versehenes Dämpferventil vorgesehen, das wirkungsmäßig zwischen dem Verbindungskanal 33 und dem Ausgleichsraum 8 geschaltet und so ausgeführt ist, das es nur in einer Richtung durchströmbar ist. Das vorzugsweise senkrecht zur Längsachse des erfindungsgemäßen Schwingungsdämpfers am Außenrohr 7 angebrachtes Dämpferventil 10 dient zur Änderung des Durchflußquerschnitts der erwähnten Verbindung zwischen dem Verbindungskanal 33 und dem Ausgleichsraum 8.

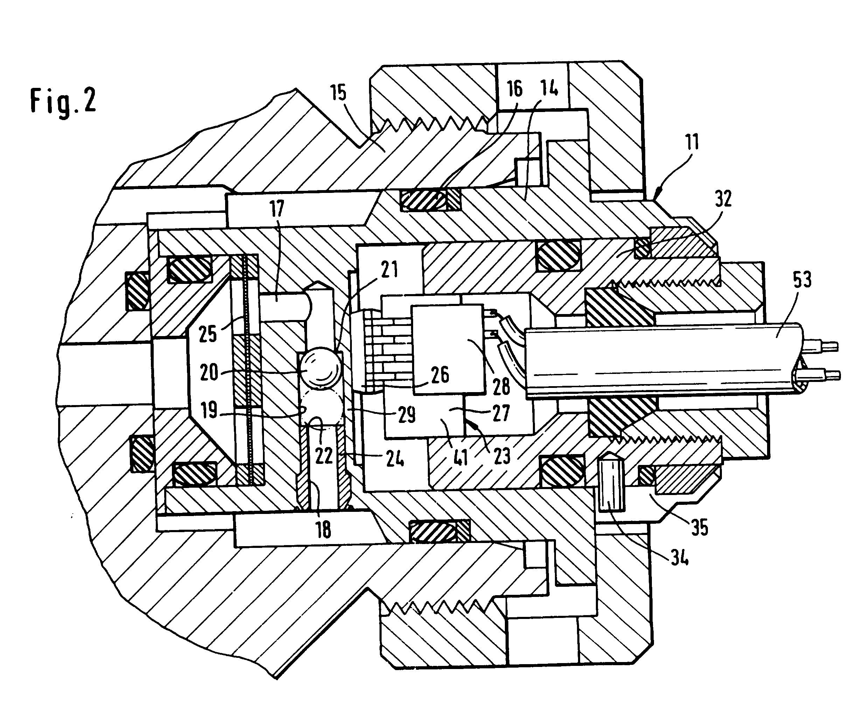

Um im Betrieb des erfindungsgemäßen Schwingungsdämpfers die Bewegungsrichtung des Kolbens 3 zu ermitteln, sind im Bodenbereich seitlich am Außenrohr 7 eine erste sowie eine zweite Sensoranordnung 11,54 vorgesehen, die in einem gemeinsamen Sensorgehäuse angeordnet sein können und zwischen der zweiten Arbeitkammer 5 (über einen durch das Rohr 6 begrenzten hydraulischen Ringraum 12) und dem Ausgleichsraum 8 geschaltet sind. Ausführungsvarianten der Sensoranordnungen sind den Figuren 2 bis 4 zu entnehmen.

Wie insbesondere aus der Fig. 2 erhellt, besteht die vorzugsweise von einem am Außenrohr 7 senkrecht zur Längsachse des Schwingungsdämpfers angebrachten Anschlußteil 15 aufgenommene Sensoranordnung 11 aus einem Sensorgehäuse 14 aus nicht magnetischem Werkstoff, das gegenüber dem Anschlußteil 15 mittels einer Dichtung, beispielsweise eines O-Ringes 16 abgedichtet ist. Das Sensorgehäuse 14 weist Druckmittelkanäle 17,18 auf, die mit der zweiten Arbeitskammer 5 bzw. dem Ausgleichsraum 8 des erfindungsgemäßen Schwingungsdämpfers in Verbindung stehen. Im Übergangsbereich der Druckmittelkanäle 17,18 ist im Sensorgehäuse 14 eine zylindrische Bohrung 19 vorgesehen, die als Führung für ein begrenzt verschiebbares Sensorele nt 20, beispielsweise eine Kugel aus magnetisierbarem Werkstoff, dient. Die Bewegung der Kugel 20 entlang der Führung 19 ist einerseits durch einen am Ende des ersten Druckmittelkanals 17 ausgebildeten Anschlag 21 und andererseits durch einen Dichtsitz 22 begrenzt, der am Ende einer den zweiten Druckmittelkanal 18 bildenden, im Sensorgehäuse 14 separat angeordneten Hülse 24 ausgebildet ist. Dabei ist es vorteilhaft, wenn mindestens einem (17) der Druckmittelkanäle 17,18 ein Filter 25 vorgeschaltet ist, so daß Verunreinigungen vom Führungsbereich des Sensorelementes 20 ferngehalten werden.

Die Position des Sensorelementes bzw. der Kugel 20 wird von einer im Sensorgehäuse 14 unbeweglich angeordneten Registriereinrichtung 23 erfaßt, die vorzugsweise als elektronischer Schaltkreis ausgebildet sein kann, dem, wie in Fig. 2 dargestellt, ein magnetischer Schaltkreis vorgeschaltet ist. Die gezeigte Registriereinrichtung 23 ist durch ein Hallelement 26 gebildet, daß mit einem Permanentmagneten 27 sowie einer Auswerteelektronik 28 zusammenwirkt, deren Ausgangssignale über elektrische Leitungen 34 eines nicht gezeigten Regelkreis zugeführt werden. Dabei können als Bestandteile der Registriereinrichtung 23 beispielsweise Differenz- bzw. Digital-Hallsensoren sowie verschiedene magnetoresistive Sensoren eingesetzt werden. Außerdem ist es sehr günstig, wenn die Kraftlinien des durch den Permanentmagneten 27 erzeugten Magnetfelders senkrecht zur Bewegungsrichtung der Kugel 20 verlaufen.

Die Registriereinrichtung 23 befindet sich dabei in einem im Sensorgehäuse 14 ausgebildeten Raum 41, der einerseits durch eine im Bereich der Druckmittelkanäle 17,18 angeordnete Trennwand 29 und andererseits durch ein Verschlußteil 32 begrenzt ist, wobei das Verschlußteil 32 gleichzeitig als Mittel zur Zugentlastung der von der Auswerteelektronik 28 führenden elektrischen Leitungen 53 dient. Das Sensorgehäuse 14 sowie das Verschlußteil 32 bestehen dabei aus nicht magnetischen Werkstoffen. Um schließlich die Montage der Sensoranordnung zu erleichtern ist im Verschlußteil 32 ein Zentrierungsstift 34 vorgesehen, der beim Verschließen des Sensorgehäuses 14 in eine darin ausgebildete Nut 35 eingeführt wird, so daß keine Justierung der Sensoranordnung 11 erforderlich ist.

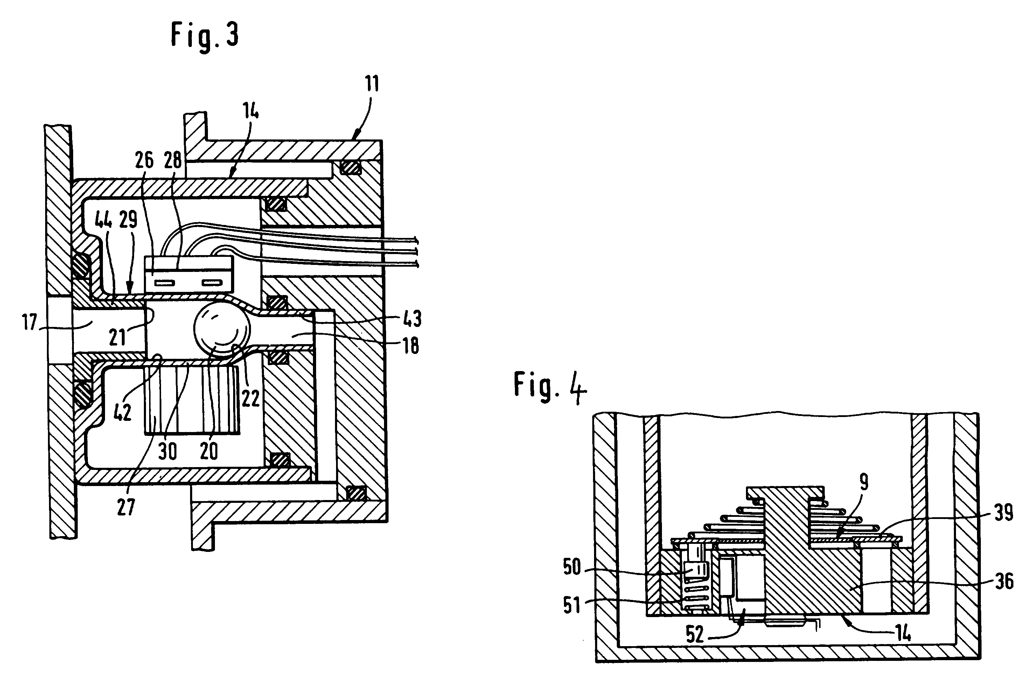

Bei der in Fig. 3 gezeigten zweiten Ausführung der erfindungsgemäßen Sensoranordnung 11 ist die Trennwand 29 durch die Wand eines rohrförmigen Führungsabschnitts 30 gebildet, in dem das kugelförmige Sensorelement 20 geführt ist. Der Führungsabschnitt 30 weist dabei einen ersten Teil 42 größeren Durchmessers, der den ersten Druckmittelkanal 17 begrenzt und in dem die Kugel 20 verschiebbar geführt ist, sowie einen zweiten Teil 43 kleineren Durchmessers auf, der teilweise zum zweiten Druckmittelkanal 18 gehört, wobei der Übergangsbereich zwischen den beiden Teilen 42,43 den bereits erwähnten Dichtsitz 22 bildet. Der die Bewegung der Kugel 20 im Führungsabschnitt 30 begrenzende Anschlag 21 ist an einer in den Führungsabschnitt 30 eingeschobenen Hülse 44 ausgebildet. Das die Bewegung der Kugel 20 sensierende magnetoresistive Element bzw.

Hallelement 26 ist dabei vorzugsweise in der Auswerteelektronik 28 integriert, die vom Permanentmagneten 27 durch die rohrförmige Trennwand 29 getrennt ist und zwar so, daß die Auswerteeleketronik 28 und der Permanentmagnet 27 auf gegenüberliegenden Seiten des Führungsbaschnittes 30 angeordnet sind.

Die Funktionsweise der in Fig. 2 und 3 gezeigten Sensoranordnung 11 ist sehr einfach und beruht auf der Wirkung von den im Ausgleichsraum 8 sowie der unteren Arbeitskammer 5 herrschenden hydraulischen Drücken. Bei einer Bewegung des Kolbens 3 (Fig. 1) nach unten, die der Druckstufe entspricht, wird der Druck in der unteren Arbeitskammer 5 höher als der im Ausgleichsraum 8 herrschende hydraulische Druck, so daß auf die Kugel 20 eine in der Zeichnung nach rechts gerichtete Kraftkomponente einwirkt, die die Kugel 20 in Richtung auf den Dichtsitz 22 zu verschiebt, der dadurch geschlossen wird. In der Zugstufe bzw. bei einer Bewegung des Kolbens 3 nach oben, bei der in der unteren Arbeitskammer 5 ein Unterdruck entsteht, erfolgt eine Bewegung der Kugel 20 in Richtung auf den Anschlag 21 zu, an dem sie schließlich zur Anlage kommt. Die beschriebenen Bewegungen der Kugel 20 werden dabei von der Registriereinrichtung 23 erfaßt, deren Auswerteelektronik 28 Ausgangssignale erzeugt, die anschließend in der vorhin erwähnten, nicht gezeigten Regelschaltung weiterverarbeitet werden.

Bei der in Fig. 4 gezeigten dritten Ausführungsform der Erfindung ist die Sensoranordnung 11 schließlich in dem im Bodenbereich des Arbeitszylinders 1 angeordneten Ventilkörper 36 des ersten Rückschlagventils 9 angeordnet, der gleichzeitig das Sensorgehäuse 14 bildet. Der Ventilkörper 36 nimmt ein in Richtung auf den Schließkörper 39 zu mittels einer Druckfeder 51 vorgespanntes, begrenzt bewegbares Sensorelement 51 auf, der durch den Schließkörper 39 des ersten Rückschlagventils 9 betätigbar ist und dessen Position mittels einer Registriereinrichtung 52 erfaßt wird, die, wie vorhin erwähnt, beispielsweise durch ein magnetoresistives Element bzw. Hallelement, einen Permanentmagneten sowie eine Auswerteelektronik gebildet sein kann. Der Ventil- 36 sowie der Schließkörper 39 bestehen bei dieser Ausführungsvariante aus einem nichtmagnetischem Werkstoff, während das Sensorelement 50 aus magnetisierbarem Material besteht.

## Patentansprüche

1. Hydraulischer regelbarer Schwingungsdämpfer für Kraftfahrzeuge mit einem Arbeitszylinder (1), dessen Innenraum mittels eines durch eine Kolbenstange (2) verschiebbaren Kolbens (3) in eine erste Kolbenstangenseitige (4) sowie eine zweite Arbeitskammer (5) unterteilt ist, mit einem mit beiden Arbeitskammern (4,5) in Verbindung stehenden Ausgleichsraum (8), der mit der ersten Arbeitskammer (4) über einen Verbindungskanal (33) und mit der zweiten Arbeitskammer (5) über ein erstes Rückschlagventil (9) verbunden ist, einem steuerbaren Dämpferventil (10), das Änderungen der Dämpfungskraft ermöglicht, sowie einer Sensoranordnung (11), deren Ausgangsgröße eine Erkennung der Bewegungsrichtung des Kolbens (3) ermöglicht, dadurch **gekennzeichnet,** daß die Sensoranordnung (11) zwischen der zweiten Arbeitskammer (5) und dem Ausgleichsraum (8) geschaltet und durch den dazwischen herrschenden Differenzdruck betätigbar ist.

2. Schwingungsdämpfer nach Anspruch 1, dadurch **gekennzeichnet,** daß zwischen der ersten Arbeitskammer (4) und dem Ausgleichsraum (8) eine zweite Sensoranordnung (54) geschaltet ist, wobei die erste (11) und die zweite Sensoranordnung (54) unterschiedliche Schaltpunktwerte aufweisen.

3. Schwingungsdämpfer nach Anspruch 1 oder 2, dadurch **gekennzeichnet,** daß die Sensoranordnung (11,54) durch ein mit dem Differenzdruck beaufschlagbares, begrenzt in einem Sensorgehäuse (14) verschiebbares Sensorelement (20) gebildet ist, das mit einer seine Position erfassenden, unbeweglich angeordneten Registriereinrichtung (23) zusammenwirkt.

4. Schwingungsdämpfer nach Anspruch 3, dadurch **gekennzeichnet,** daß das Sensorgehäuse (14) durch den Ventilkörper (36) des ersten Rückschlagventils 8)) gebildet ist, in dem ein in Richtung auf seinen Schließkörper (39) zu vorgespanntes, durch den Schließkörper (39) betätigbares Sensorelement (50) begrenzt bewegbar angeordnet ist.

5. Schwingungsdämpfer nach Anspruch 3, dadurch **gekennzeichnet,** daß das Sensorelement als eine im Sensorgehäuse (14) geführte Kugel (20) ausgebildet ist, deren Bewegung einerseits durch einen Anschlag (21) und andererseits durch einen Dichtsitz (22) begrenzt ist.

6. Schwingungsdämpfer nach Anspruch 5, dadurch **gekennzeichnet,** daß die Kugel (20) durch eine Feder vorgespannt ist.

7. Schwingungsdämpfer nach Anspruch 5, dadurch **gekennzeichnet,** daß der Anschlag (21) am Ende eines mit der zweiten Arbeitskammer (5) in Verbindung stehenden, im Sensorgehäuse (14) ausgebildeten Druckmittelkanals (17) vorgesehen ist.

8. Schwingungsdämpfer nach Anspruch 5, dadurch **gekennzeichnet,** daß der Dichtsitz (22) am Ende eines mit dem Ausgleichsraum (8) in Verbindung stehenden, im Sensorgehäuse (14) ausgebildeten Druckmittelkanals (18) vorgesehen ist.

9. Schwingungsdämpfer nach Anspruch 8, dadurch **gekennzeichnet,** daß der Druckmittelkanal (18) als eine im Sensorgehäuse (14) unbeweglich separat angeordnete Hülse (24) ausgebildet ist.

10. Schwingungsdämpfer nach Anspruch 3, dadurch **gekennzeichnet,** daß das Sensorelement (20) aus magnetischem Werkstoff besteht.

11. Schwingungsdämpfer nach Anspruch 6 oder 7, dadurch **gekennzeichnet,** daß im Druckmittelkanal (17 bzw. 18) dem Sensorelement (20) Filter (25) vorgeschaltet sind.

12. Schwingungsdämpfer nach Anspruch 3, dadurch **gekennzeichnet,** daß die Registriereinrichtung (23) als elektrischer Schaltkreis ausgebildet ist.

13. Schwingunsdämpfer nach Anspruch 12, dadurch **gekennzeichnet,** daß dem elektrischen Schaltkreis ein magnetischer bzw. optischer Schaltkreis vorgeschaltet ist.

14. Schwingungsdämpfer nach Anspruch 3 oder 4, dadurch **gekennzeichnet,** daß die Registriereinrichtung (23) durch ein Hallelement (26) gebildet ist, das mit einem Permanentmagneten (27) sowie einer Auswerteelektronik (28) zusammenwirkt.

15. Schwingungsdämpfer nach Anspruch 3 oder 4, dadurch **gekennzeichnet,** daß die Registriereinrichtung (23) durch ein magnetoresistives Element gebildet ist, das mit einem Permanentmagneten sowie einer Auswerteelektronik zusammenwirkt.

16. Schwingungsdämpfer nach Anspruch 14 oder 15, dadurch **gekennzeichnet,** daß beide Sensoranordnungen (11,54) in einem Sensorgehäuse angeordnet sind, wobei ihre Registriereinrichtungen mit einem einzigen Permenantmagneten zusammenwirken.

17. Schwingungsdämpfer nach Anspruch 14, dadurch **gekennzeichnet,** daß das Hallelement (26) als Differenz-Hallsensor ausgeführt ist.

18. Schwingungsdämpfer nach Anspruch 14, dadurch **gekennzeichnet,** daß das Hallelement (26) als Digital-Hallsensor ausgeführt ist.

19. Schwingungsdämpfer nach einem der Ansprüche 3 bis 18, dadurch **gekennzeichnet,** daß die Kraftlinien des durch den Permanentmagneten (27) erzeugten Magnetfeldes senkrecht zur Bewegungsrichtung des Sensorelementes (20) ausgerichtet sind.

20. Schwingungsdämpfer nach Anspruch 3, dadurch **gekennzeichnet,** daß das Sensorelement (20) und die Registriereinrichtung (23) durch eine im Sensorgehäuse (14) vorgesehene Trennwand (29) voneinander getrennt sind.

21. Schwingungsdämpfer nach Anspruch 20, dadurch **gekennzeichnet,** daß die Trennwand (29) als Wand eines rohrförmigen, das Sensorelement (20) führenden Führungsabschnittes (30) ausgebildet ist, der im Sensorgehäuse (14) angeordnet ist bzw. mit ihm einteilig ausgebildet ist.

22. Schwingungsdämpfer nach einem der vorhergehenden Ansprüche 3 und 5 bis 21, dadurch **gekennzeichnet,** daß das Sensorgehäuse (14) mittels eines Verschlußteiles (32) geschlossen ist, das als Mittel zur Zugentlastung von zur Auswerteelektronik (28) führenden elektrischen Leitungen (53) ausgebildet ist.

23. Schwingungsdämpfer nach Anspruch 22, dadurch **gekennzeichnet,** daß im Verschlußteil (32) ein Zentrierstift (34) vorgesehen ist, der mit einer im Sensorgehäuse (14) ausgebildeten Nut (35) zusammenwirkt.

24. Schwingungsdämpfer nach einem der vorhergehenden Ansprüche 3 und 5 bis 23, dadurch **gekennzeichnet,** daß das Sensorgehäuse (14) sowie das Verschlußteil (32) aus nichtmagnetischem Werkstoff bestehen.

25. Schwingungsdämpfer nach Anspruch 4, dadurch **gekennzeichnet,** daß der Ventilkörper (36) sowie der Schließkörper (39) aus nichtmagnetischem Werkstoff, während das Sensorelement (50) aus magnetisierbarem Werkstoff bestehen.

26. Schwingungsdämpfer nach Anspruch 1, dadurch **gekennzeichnet,** daß die Sensoranordnung (11) seitlich am Arbeitszylinder (1) bzw. einem koaxial zum Arbeitszylinder (1) angeordneten Außenrohr (7), vorzugsweise senkrecht zur Längsachse des Arbeitszylinders (1) angeordnet ist.

27. Schwingungsdämpfer nach Anspruch 1, dadurch **gekennzeichnet,** daß die Sensoranordnung (11) austauschbar ausgebildet ist.

28. Schwingungsdämpfer nach Anspruch 1, dadurch **gekennzeichnet,** daß die Sensoranordnung (11) im Bodenbereich des Arbeitszylinders (1) angeordnet ist.

29. Schwingungsdämpfer nach Anspruch 16, dadurch **gekennzeichnet,** daß das Sensorgehäuse im Bodenbereich des Arbeitszylinders (1) angeordnet ist.

## Claims

1. A hydraulic controllable vibration absorber for automotive vehicles, including a power cylinder (1) having an interior space subdivided by a piston (3), that is slidable by a piston rod (2), into a first power chamber (4) on the side of the piston rod and a second power chamber (5), a balancing chamber (8) which is connected to both power chambers (4, 5) and is connected to the first power chamber (4) through a connecting duct (33) and to the second power chamber (5) by way of a first non-return valve (9), a controllable vibration absorber valve (10) for varying a vibration absorbing force, and a sensor arrangement (11) having an output variable for recognizing the direction of movement of the piston (3),
**characterized** in that the sensor arrangement (11) is inserted between the second power chamber (5) and the balancing chamber (8) and is operable by the differential pressure prevailing between the two chambers.

2. A vibration absorber as claimed in claim 1,
**characterized** in that between the first power chamber (4) and the balancing chamber (8) a second sensor arrangement (54) is inserted, and the first (11) and the second (54) sensor arrangements have different switching point values.

3. A vibration absorber as claimed in claim 1 or claim 2,
**characterized** in that the sensor arrangement (11, 54) comprises a sensor element (20) which is subjectible to the pressure differential, which is movable to a limited extent within a sensor housing (14) and which interacts with a recording device (23) that is arranged so as to be unmovable and monitors the position of the sensor element.

4. A vibration absorber as claimed in claim 3,
**characterized** in that the sensor housing (14) comprises the valve body (36) of the first non-return valve (8), within which a sensor element (50), prestressed in the direction of its closing member (39) and actuatable by the closing member (39), is positioned so as to be movable to a limited extent.

5. A vibration absorber as claimed in claim 3,
**characterized** in that the sensor element takes the shape of a ball (20) which is guided within the sensor housing (14) and whose movement is limited, on the one hand, by a stop (21) and, on the other hand, by a sealing seat (22).

6. A vibration absorber as claimed in claim 5,
**characterized** in that the ball (20) is biassed by a spring.

7. A vibration absorber as claimed in claim 5,
**characterized** in that the stop (21) is provided at the end of a pressure agent duct (17) which is in connection with the second power chamber (5) and is configured within the sensor housing (14).

8. A vibration absorber as claimed in claim 5,
**characterized** in that the sealing seat (22) is provided at the end of a pressure agent duct (18) which is in connection with the balancing chamber (8) and is configured within the sensor housing (14).

9. A vibration absorber as claimed in claim 8,
**characterized** in that the pressure agent duct (18) is configured in the shape of a sleeve (24) which is arranged within the sensor housing (14) so as to be unmovable and separate.

10. A vibration absorber as claimed in claim 3,
**characterized** in that the sensor element (20) consists of magnetic material.

11. A vibration absorber as claimed in claim 6 or in claim 7,
**characterized** in that filters (25) within the pressure agent duct (17, respectively 18) precede the sensor element (20).

12. A vibration absorber as claimed in claim 3,
**characterized** in that the recording device (23) is an electric switching circuit.

13. A vibration absorber as claimed in claim 12,
**characterized** in that a magnetic or an optical switching circuit precedes the electric switching circuit.

14. A vibration absorber as claimed in claim 3 or in claim 4,
**characterized** in that the recording device (23) comprises a Hall element (26) interacting with a permanent magnet (27) and with an evaluating electronic unit (28).

15. A vibration absorber as claimed in claim 3 or in claim 4,
**characterized** in that the recording device (23) is a magneto-resistive element interacting with a permanent magnet and with an evaluating electronic unit.

16. A vibration absorber as claimed in claim 14 or in claim 15,
**characterized** in that both sensor arrangements (11, 54) are positioned within one sensor housing, their recording devices interacting with one single permanent magnet.

17. A vibration absorber as claimed in claim 14,
**characterized** in that the Hall element (26) is a differential Hall sensor.

18. A vibration absorber as claimed in claim 14,
**characterized** in that the Hall element (26) is a digital Hall sensor.

19. A vibration absorber as claimed in anyone of claims 3 to 18,
**characterized** in that the lines of force of the magnetic field generated by the permanent magnet (27) are aligned at a right angle to the direction of movement of the sensor element (20).

20. A vibration absorber as claimed in claim 3,
**characterized** in that the sensor element (20) and the recording device (23) are separated from each other by a partition wall (29) which is provided within the sensor housing (14).

21. A vibration absorber as claimed in claim 20,
**characterized** in that the partition wall (29) is a wall of a tubular guide section (30) which guides the sensor element (20) and is arranged within the sensor housing (14) and/or is formed in one piece with it.

22. A vibration absorber as claimed in anyone of the preceding claims 3 and 5 to 21,
**characterized** in that the sensor housing (14) is shut by a closing element (32) which is configured being a means for the strain relief of electric lines (53) leading to the evaluating electronic unit (28).

23. A vibration absorber as claimed in claim 22,
**characterized** in that a centering pin (34) is provided in the closing element (32) and interacts with a groove (35) formed in the sensor housing (14).

24. A vibration absorber as claimed in anyone of the preceding claims 3 and 5 to 23,
**characterized** in that the sensor housing (14) and the closing element (32) are made of non-magnetic material.

25. A vibration absorber as claimed in claim 4,
**characterized** in that the valve body (36) and the closing element (39) are made of non-magnetic material, and wherein the sensor element (50) is made of magnetizable material.

26. A vibration absorber as claimed in claim 1,
**characterized** in that the sensor arrangement (11) is positioned laterally adjacent the power cylinder (1), respectively an external tube (7) arranged coaxially with the power cylinder (1), preferably at a right angle to the longitudinal axis of the power cylinder (1).

27. A vibration absorber as claimed in claim 1,
**characterized** in that the sensor arrangement (11) is adapted so as to be exchangeable.

28. A vibration absorber as claimed in claim 1,
**characterized** in that the sensor arrangement (11) is arranged proximate the bottom range of the power cylinder (1).

29. A vibration absorber as claimed in claim 16,
**characterized** in that the sensor housing is arranged proximate the bottom range of the power cylinder (1).

## Revendications

1. Amortisseur de vibrations hydraulique réglable pour véhicules automobiles, comprenant un cylindre de travail (1), dont l'espace intérieur est divisé, par un piston (3) pouvant être déplacé par l'intermédiaire d'une tige de piston (2), en une première chambre de travail (4) côté tige de piston, et une seconde chambre de travail (5), et comprenant une chambre d'équilibrage (8) communiquant avec les deux chambres de travail (4, 5), reliée à la première chambre de travail (4) par l'intermédiaire d'un canal de liaison (33) et à la seconde chambre de travail (5) par l'intermédiaire d'un premier clapet de non-retour (9), et comprenant une soupape d'amortissement pilotée (10) permettant de modifier l'effort d'amortissement, ainsi qu'un dispositif détecteur (11), dont la grandeur de sortie permet de connaître la direction de mouvement du piston (3),
caractérisé en ce que le dispositif détecteur (11) est branché entre la seconde chambre de travail (5) et la chambre d'équilibrage (8) et peut être actionné par la pression différentielle existant entre ces deux chambres.

2. Amortisseur de vibrations selon la revendication 1, caractérisé en ce qu'un deuxième dispositif détecteur (54) est branché entre la première chambre de travail (4) et la chambre d'équilibrage (8), le premier dispositif détecteur (11) et le deuxième dispositif détecteur (54) ayant des seuils de commutation différents.

3. Amortisseur de vibrations selon la revendication 1 ou 2, caractérisé en ce que le dispositif détecteur (11, 54) est constitué par un élément détecteur (20) soumis à la pression différentielle, mobile en translation dans certaines limites à l'intérieur d'un boîtier détecteur (14), qui coopère avec un dispositif enregistreur (23) installé de façon stationnaire, détectant la position de cet élément.

4. Amortisseur de vibrations selon la revendication 3, caractérisé en ce que le boîtier du détecteur (14) est constitué par le corps de soupape (36) du premier clapet de non-retour (8), à l'intérieur duquel un élément détecteur (50), précontraint en direction de l'élément obturateur (39) et pouvant être actionné par l'élément obturateur (39), est disposé de façon mobile dans certaines limites.

5. Amortisseur de vibrations selon la revendication 3, caractérisé en ce que l'élément détecteur est réalisé sous forme d'une bille (20) guidée à l'intérieur du boîtier détecteur (14), dont le déplacement est limité d'un côté par une butée (21) et de l'autre côté par un siège d'étanchéité (22).

6. Amortisseur de vibrations selon la revendication 5, caractérisé en ce que la bille (20) est rappelée par un ressort.

7. Amortisseur de vibrations selon la revendication 5, caractérisé en ce que la butée (21) est prévue à l'extrémité d'un canal (17) de fluide de pression communiquant avec la seconde chambre de travail (5), aménagé dans le boîtier détecteur (14).

8. Amortisseur de vibrations selon la revendication 5, caractérisé en ce que le siège d'étanchéité (22) est prévu à l'extrémité d'un canal (18) de fluide de pression communiquant avec la chambre d'équilibrage (8), aménagé dans le boîtier détecteur (14).

9. Amortisseur de vibrations selon la revendication 8, caractérisé en ce que le canal (18) de fluide de pression est réalisé sous forme d'une douille (24) installée séparément et de façon stationnaire dans le boîtier détecteur (14).

10. Amortisseur de vibrations selon la revendication 3, caractérisé en ce que l'élément détecteur (20) est fabriqué en une matière magnétique.

11. Amortisseur de vibrations selon la revendication 6 ou 7, caractérisé en ce que des filtres (25) sont respectivement installés en amont de l'élément détecteur (20) dans le canal de fluide de pression (17 ou 18).

12. Amortisseur de vibrations selon la revendication 3, caractérisé en ce que le dispositif enregistreur (23) est réalisé sous forme d'un circuit de commande électrique.

13. Amortisseur de vibrations selon la revendication 12, caractérisé en ce qu'un circuit de commande magnétique ou optique est branché en amont du circuit de commande électrique.

14. Amortisseur de vibrations selon la revendication 3 ou 4, caractérisé en ce que le dispositif enregistreur (23) est constitué par un élément *Hall* (26), qui coopère avec un aimant permanent (27) et un circuit électronique d'analyse (28).

15. Amortisseur de vibrations selon la revendication 3 ou 4, caractérisé en ce que le dispositif enregistreur (23) est constitué par un élément magnétorésistif, qui coopère avec un aimant permanent et un circuit électronique d'analyse.

16. Amortisseur de vibrations selon la revendication 14 ou 15, caractérisé en ce que les deux dispositifs détecteurs (11, 54) sont agencés dans un boîtier détecteur, leurs dispositifs enregistreurs respectifs coopérant avec un seul aimant permanent.

17. Amortisseur de vibrations selon la revendication 14, caractérisé en ce que l'élément *Hall* (26) est realisé sous forme d'un capteur différentiel *Hall.*

18. Amortisseur de vibrations selon la revendication 14, caractérisé en ce que l'élément *Hall* (26) est réalisé sous forme d'un capteur *Hall* numérique.

19. Amortisseur de vibrations selon l'une des revendications 3 à 18, caractérisé en ce que les lignes de force du champ magnétique créé par l'aimant permanent (27) sont orientées perpendiculairement au sens de mouvement de l'élément détecteur (20).

20. Amortisseur de vibrations selon la revendication 3, caractérisé en ce que l'élément détecteur (20) et le dispositif enregistreur (23) sont séparés l'un de l'autre par une cloison séparatrice (29) prévue dans le boîtier détecteur (14).

21. Amortisseur de vibrations selon la revendication 20, caractérisé en ce que la cloison séparatrice (29) est réalisée sous forme d'une paroi d'une partie de guidage tubulaire (30), qui guide l'élément détecteur (30) et est aménagée dans le boîtier détecteur (14) ou fait partie intégrante de celui-ci.

22. Amortisseur de vibrations selon l'une des revendications précédentes 3 et 5 à 21, caractérisé en ce que le boîtier détecteur (14) est fermé au moyen d'un opercule (32), qui est configuré de manière à servir de moyen de protection anti-arrachement pour les câbles (53) reliés au circuit électronique d'analyse (28).

23. Amortisseur de vibrations selon la revendication 22, caractérisé en ce qu'un pion de centrage (34) est prévu dans l'opercule (32) et coopère avec une rainure (35) ménagée dans le boîtier détecteur (14).

24. Amortisseur de vibrations selon l'une des revendications précédentes 3 et 5 à 23, caractérisé en ce que le boîtier détecteur (14) ainsi que l'opercule (32) sont réalisés à partir d'une matière amagnétique.

25. Amortisseur de vibrations selon la revendication 4, caractérisé en ce que le corps de soupape (36) et l'élément obturateur (39) sont réalisés en une matière amagnétique, alors que l'élément détecteur (50) est fabriqué à partir d'une matière pouvant être aimantée.

26. Amortisseur de vibrations selon la revendication 1, caractérisé en ce que le dispositif capteur (11) est installé latéralement sur le cylindre de travail (1) ou sur un tube extérieur (7) disposé coaxialement au cylindre de travail (1), de préférence perpendiculairement à l'axe longitudinal du cylindre de travail.

27. Amortisseur de vibrations selon la revendication 1, caractérisé en ce que le dispositif détecteur (11) est configuré de manière à pouvoir être remplacé.

28. Amortisseur de vibrations selon la revendication 1, caractérisé en ce que le dispositif détecteur (11) est installé au niveau du fond du cylindre de travail (1).

29. Amortisseur de vibrations selon la revendication 16, caractérisé en ce que le boîtier du détecteur est installé au niveau du fond du cylindre de travail (1).
